# EUROPEAN PATENT SPECIFICATION

(11) **EP 0 875 537 B1**
(45) Date of publication and mention of the grant of the patent: **21.05.2003**
(21) Application number: 98660034.4
(22) Date of filing: 20.04.1998
(51) Int. Cl.: C09C 1/02, D21H 19/64

(54) **Use of waterglass in a paper coating**
Verwendung von Wasserglas in einer Papierbeschichtung
L'utilisation de verre soluble dans un revêtement de papier

(30) Priority: 30.04.1997 FI 971841
(43) Date of publication of application: 04.11.1998
(73) Proprietor: M-real Corporation, 02100 Espoo (FI)
(72) Inventor: Lehtimäki, Janne, 00150 Helsinki (FI)
(74) Representative: Papula, Antti

(56) References cited:
- EP-A- 0 282 151
- EP-A- 0 356 406
- DE-A- 2 344 082
- GB-A- 1 513 047
- DATABASE WPI Section Ch, Week 8104 Derwent Publications Ltd., London, GB; Class A93, AN 81-04409D XP002073844 & JP 55 146 736 A (MITSUO K)
- DATABASE WPI Section Ch, Week 9252 Derwent Publications Ltd., London, GB; Class A82, AN 92-429949 XP002073845 & JP 04 327 297 A (SHINTO PAINT CO LTD)
- DATABASE WPI Section Ch, Week 9704 Derwent Publications Ltd., London, GB; Class A82, AN 97-041004 XP002073846 & RU 2 055 821 C (MTSK STOCK CO)

## Description

The present invention relates to the use of waterglass in a paper coating mixture.

The coating, usually a coating paste, consists of a dispersion containing finely powdered solid material, such as kaolin, calcium carbonate or similar pigment as is generally known in the art; a bleaching agent, i.e. an optical whitener; a dispersing agent, e.g. NaPAA and other additives. The viscosity of the dispersion is adjusted expressly by using dispersing agents and by adjusting the amount of solids.

In the manufacture of a paper coating, especially when a pigment containing calcium is added to the coating, the calcium produces solidification of the coating, i.e. a so-called calcium shock occurs. The coating is solidified when the concentration of dissolved calcium ions reaches a so-called critical coagulation concentration level. In consequence of precipitation, coagulation, the activity of the dispersing agent in the coating mixture is inhibited and the mixture becomes a highly viscose, almost solid mixture instead of a dispersion.

Investigations have been carried out to elucidate the effect of different chemicals on the calcium shock occurring in paper coatings. It is known that certain optical whiteners, such as distilbene derivatives, reduce the viscosity of calcium based coatings, forming bonds with calcium ions and preventing or alleviating the calcium shock.

Further, it is known that a hydrophilic polymer, e.g. starch, a starch derivative or a cellulose derivative, e.g. carboxy-ethyl cellulose, can retard the dissolution of gypsum. When the dissolution of gypsum is retarded, the amount of free calcium ions in the solution is reduced and calcium shock is partly or completely prevented. In this case, however, in addition to a hydrophilic polymer, zeolite must be added to the solution. The function of zeolite is e.g. to change the remaining free calcium ions via an ion exchange reaction into ammonium or alkali metal ions, which are harmless to the dispersing agent. In this way, a gypsum slurry is obtained which has a viscosity up to 50 % lower than in normal gypsum slurry. If no hydrophilic polymer is added, the amount of zeolite needed is so large that it has an effect on the packing of gypsum particles and thus increases the viscosity of the solution.

Document EP 356406 discloses a process for preparation of an acid resistant coating on filler particles by mixing slurried calcium carbonate particles simultaneously with a solution of a zinc compound and a solution of a silica-containing substance.

Document DE 2344082 discloses incombustible asbestos based wall and ceiling decorations such as e.g. wallpaper.

Document JP 55146736 discloses the production of laminate materials having surface relief pattern by coating substrate e.g. paper with material forming a relieve pattern.

Document JP 4327297 discloses antislip agent composition for cardboard boxes containing calcium sulphate whiskers and optionally colloidal silica, waterglass and resin emulsion.

Document SU 2055821 discloses a protective and decorative coating composition having enhanced chemical resistance and bioresistance for internal and external surfaces of buildings.

Document EP 282151 discloses an aqueous solution comprising a slightly water-soluble inorganic material, hydrophilic polymeric material, natural or synthetic zeolite and dispersing agent. The solution may be used in a paper coating composition.

Document GB 1513047 discloses a process for the production of coated papers where the coating composition contains pigment (e.g. kaolin), binder (e.g. starch and latex) and chemical additives such as dispersing agents and Ca-stearate and a synthetic amorphous product consisting of silica and/or a silicate of sodium-aluminium and/or calcium.

A problem with prior-art methods is that they do not have sufficiently strong effects on calcium shock or that they require the use of several chemicals in order to be effective.

The object of the present invention is to eliminate the drawbacks mentioned above.

A specific object of the present invention is to disclose a method whereby the harmful solidification of a filler, i.e. calcium shock can be prevented.

A further object of the invention is to disclose a method whereby calcium shock in a coating mixture can be prevented without producing harmful effects on the coating and on the qualities it gives the paper.

The use of the invention is characterised by what is presented in the claims.

In investigations preceding the invention, it was established that calcium shock is the result of two phenomena. Generally, the function of the dispersing agent is expressly to be absorbed by the edge surfaces of the filler, usually kaolin. However, a high calcium ion concentration has the effect that the dispersing agent, e.g. NaPAA (sodium polyacrylic acid), is absorbed by the kaolin base surfaces as well, whose proportion is much larger than the proportion of edge surfaces. Therefore, a disproportionately large amount of dispersing agent would be needed. In addition, calcium ions form low-solubility or insoluble complexes with the dispersing agent (NaPAA), and these complexes precipitate from the solution. Consequently, the concentration of active dispersing agent falls and the viscosity of the coating rises sharply, in other words, the calcium and the coating are solidified; a calcium shock occurs.

In investigations relating to the mechanism of the calcium shock, a portion of a kaolin dispersion was solidified using a small amount of calcium, while the viscosity of the remaining portion remained practically unchanged. For these two portions, the same solids content and ash percentage values were obtained in the measurements. When calcium was added to the non-solidified portion of the kaolin dispersion, this portion was solidified as well. In another experiment, two kaolin slurries with a solids content of 45 % were prepared. The first slurry was prepared by adding some water to a commercial slurry containing a dispersing agent, i.e. the slurry contained 0.27 pph NaPAA. The second slurry was prepared from the same components as the first slurry but without a dispersing agent. The first slurry had a very low viscosity, whereas the second slurry had a very high viscosity. When calcium in the form of calcium chloride was added to both slurries, the viscosity of the first slurry rose to the same level with the viscosity of the second slurry, whereas nothing happened to the second slurry. - From these experiments we can draw the conclusion that the dispersing agent is inactivated in a calcium shock.

In the use of the present invention, waterglass is added to a coating mixture containing calcium, especially gypsum, to prevent or alleviate calcium shock.

It was established that the viscosity reducing effect of waterglass was based on the fact that when waterglass was added to a coating mixture containing calcium ions, dissolved Ca²⁺ ions were changed into Na⁺ ions, so part of the calcium ions in the solution were exchanged and the calcium ion concentration fell below the critical coagulation concentration level. Thus, the formation of calcium complexes was inhibited and the dispersing agent could be active.

The amount of waterglass added to the coating mixture is suitably 0.01 - 2 pph, preferably 0.02 - 1 pph, most preferably 0.05 - 0.9 pph (parts per hundred = 1 part waterglass : 100 parts pigment dry matter).

It was further established that waterglass with a low value of x in the relationship Na₂O : x · SiO₂ is more effective as an inhibitor of calcium shock and reducer of viscosity in a coating mixture than waterglass having a high value of x. According to the invention, x = 0.1 - 10, suitably x < 3.5, preferably x < 2.5. In a preferred embodiment, the value of x in the relationship Na₂O : x · SiO₂ for the amount of waterglass to be added is x < 3.5, preferably x < 2.5, most preferably 1 or less.

Waterglass can be added to the coating mixture at any mixing stage because the reaction of formation of a calcium complex has been found to be at least partially reversible. Therefore, addition of waterglass can also be used to alleviate a calcium shock that has already taken place. The waterglass is preferably added before the addition of calcium containing pigment, such as gypsum or the like. Further, the waterglass is preferably added at as early a mixing stage as possible in order to obtain a low-viscosity coating mixture without solidification of pigment occurring in it.

In an embodiment of the invention, waterglass is added before the addition of optical whitener, e.g. a distiliben derivative, or bleaching agent, because an excessive amount of Ca²⁺ ions in the paste before the addition of optical whitener may weaken or inhibit the effect of the optical whitener.

In the following, the invention will be described by the aid of a few examples of its embodiments by referring to the attached drawings, in which
Fig. 1 is a graph representing the effect of calcium and waterglass addition on the viscosity of a coating mixture containing kaolin,
Fig. 2 is a graph representing the effect of waterglass addition on the reduction of viscosity of a coating mixture containing calcium,
Fig. 3 is a graph representing the effect of the order of waterglass addition on the viscosity of a coating mixture containing calcium, measured using a Hercules-Hi-shear viscosimeter and a high-pressure capillary viscosimeter at different shear rates, and
Fig. 4 is a graph representing the effect of the order of waterglass addition on the viscosity of a coating mixture, measured using a Brookfield viscosimeter at different shear rates.

### EXAMPLE 1

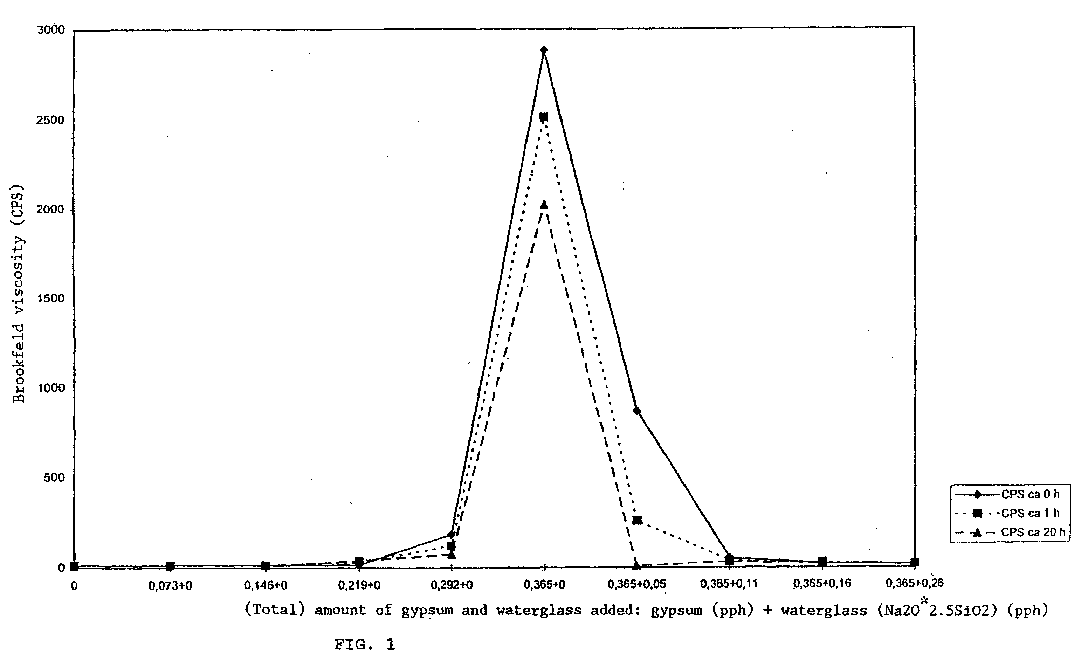

This experiment was carried out to study the effect of waterglass on the precipitation of calcium in a coating mixture and, further, on the viscosity of the mixture. In the experiment, kaolin slurry (Amazon 88) having a solids content of 38 % was used. First, gypsum slurry (CoCoat-T) and then waterglass (Zeopol 25) was added into the mixture. The amounts of waterglass added were 0.05, 0.11, 0.16 and 0.26 pph. As can be seen from Fig. 1, the addition of calcium produced a sharp rise in the viscosity, a calcium shock. The addition of waterglass had an immediate effect on the mixture, bringing its viscosity back to the original level, in other words, the shock effect was removed. At low gypsum content levels, waterglass was able to prevent calcium shock altogether.

### EXAMPLE 2

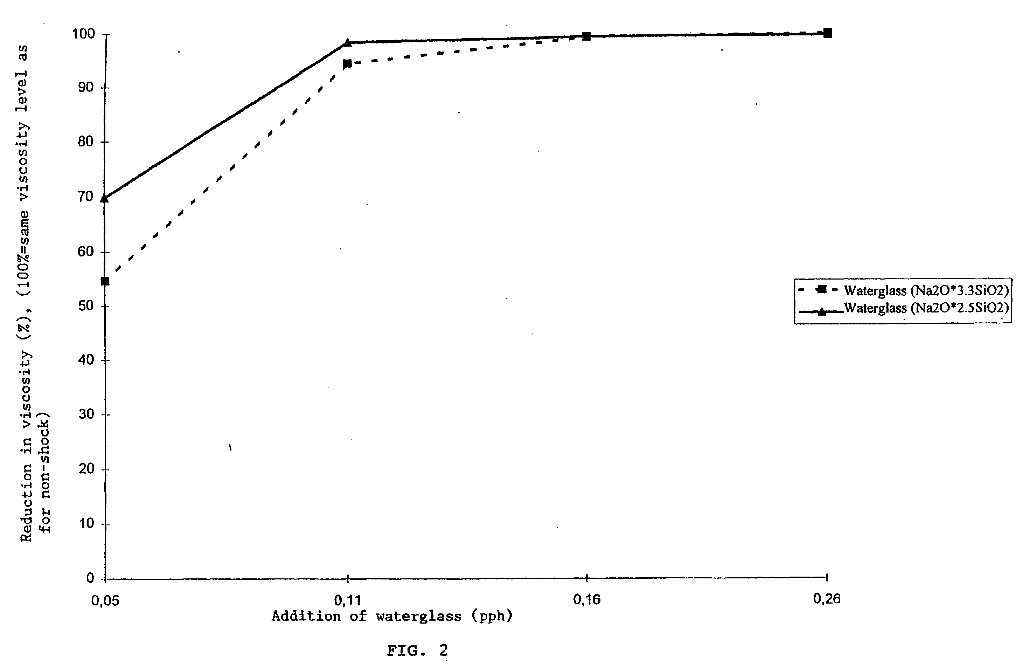

In this experiment, the effects of two commercial waterglass compounds on a slurry were compared. The slurry was prepared from kaolin and it had been shocked using a gypsum pigment slurry. Waterglass (Zeopol 25 and Zeopol 33) in amounts of 0.05, 0.11, 0.16 and 0.26 pph was added into the samples under investigation. Fig. 2 illustrates the reduction in the viscosity of the slurry as a function of the amount of waterglass added. As shown in Fig. 2, the viscosity of the slurry was significantly reduced as a result of the waterglass addition. Waterglass (Zeopol 25), which has a higher ratio of Na2O : SiO2, seemed to have a somewhat stronger effect on the viscosity of the slurry than waterglass (Zeopol 33). In this graph, a 100 % reduction in viscosity means the same viscosity level as in non-shocked slurry.

### EXAMPLE 3

To test and compare the shock effects produced by different ion types, different salts were added to a 74 w-% kaolin slurry and the changes in viscosity produced by them were compared. The dispersing agent used was NaPAA (Polysaltz S). Salts to be tested were added to the slurry so that in each experiment the salts being tested had the same ionic strength in the slurry. Changes in viscosity were estimated by stirring the mixtures with a spoon, without using any viscosity measuring devices.

The following salts were used in the test:
Sodium carbonate
Sodium sulphate
Sodium chloride
Calcium chloride
Barium chloride
Aluminium chloride

In kaolin slurries with high concentrations of these salts, a rise in the viscosity of the slurry was perceived, in other words, solidification had occurred in the mixture. The kaolin slurry formed when monovalent sodium ions were being tested had a viscosity that allowed the mixture to be stirred. After the addition of multivalent calcium or aluminium ions, the shock effect produced in the slurry was so strong that the slurry became almost solid material.

### EXAMPLE 4

The ability of waterglass to influence the viscosity of a slurry was tested by comparing its effect in different coatings. Furthermore, the effect of the order of addition of waterglass on the viscosity of the coating was studied. The reference coating selected for comparisons was a starch-containing mixture of gypsum and kaolin, which has good processing properties as a paper coating material.

The composition of the reference coating in the order of addition was as follows:

| | |
|---|---|
| Gypsum pigment slurry | (Cocoat-T) |
| Dispersing agent | (NaPAA) |
| Optical whitener | (Distilbene derivative) |
| Latex | (Styrene-butadiene) |
| Starch | (Oxidised) |
| Kaolin | (Brazilian) |
| Stearate | (Ca-stearate) |
| Other additives | (Glyoxal) |

Both kaolin and gypsum were received in the form of a ready-made slurry (Metsä-Serla, Kirkniemi). The starch was warmed in a microwave oven by keeping the water-starch mixture at a temperature of 95°C for 20 minutes.

The pH of the coating was adjusted to a value of about 7.5 using a 10% NaOH solution. The coatings were prepared in the same way; the gypsum slurry was placed in the mixing vessel before mixing was started; the first substance was added after 1 minute of mixing, and the other substances were added at 2 min intervals. The accurate scheduling enabled a good repeatability and facilitated the interpretation of the power curves of the mixer. At the same time, comparable values of total energy consumption were obtained. After the mixing, the coating was allowed to stand still for 2 h before filtering and rheological analyses.

The actual tests were carried out using commercially available waterglass (Zeopol 25, Na₂O : 2.5 SiO₂), whose solids content was 43%. The waterglass was mixed with the NaOH solution so that their molar ratio was 1 : 1.5 and the final solids content 28 - 28 %. NaOH solution was added to prevent the formation of waterglass crystals and to facilitate the filtering of the final coating mixture.

In each test, the amount of waterglass added to the coating mixture was 0.43 pph per pigment dry matter. The waterglass was added to the coating mixture at different mixing stages and the number of the test indicates the order of addition of waterglass; thus, e.g. test VG3 means that waterglass was the third substance added to the coating mixture, and correspondingly, VG9 means that waterglass was the ninth substance added to the coating mixture.

After 2 h of standstill, the coating was filtered. After the filtering, the viscosity of the coating mixture was measured using a Brookfield and Hercules Hi-shear device at different shear rates.

In the tests, the power consumption in the mixing of the reference coatings prepared without waterglass was considerably increased (120 W) after the addition of kaolin, which is indicative of a sharp rise in viscosity. A few minutes after the addition of kaolin, the power consumption was reduced to the value 60 W, at which it remained until the mixer was stopped.

For tests in which waterglass had been added to the coating mixture, the power consumption curves indicate that power consumption was not increased after the addition of kaolin if waterglass was added before kaolin. The power consumption remained at a normal level and was about 60 W.

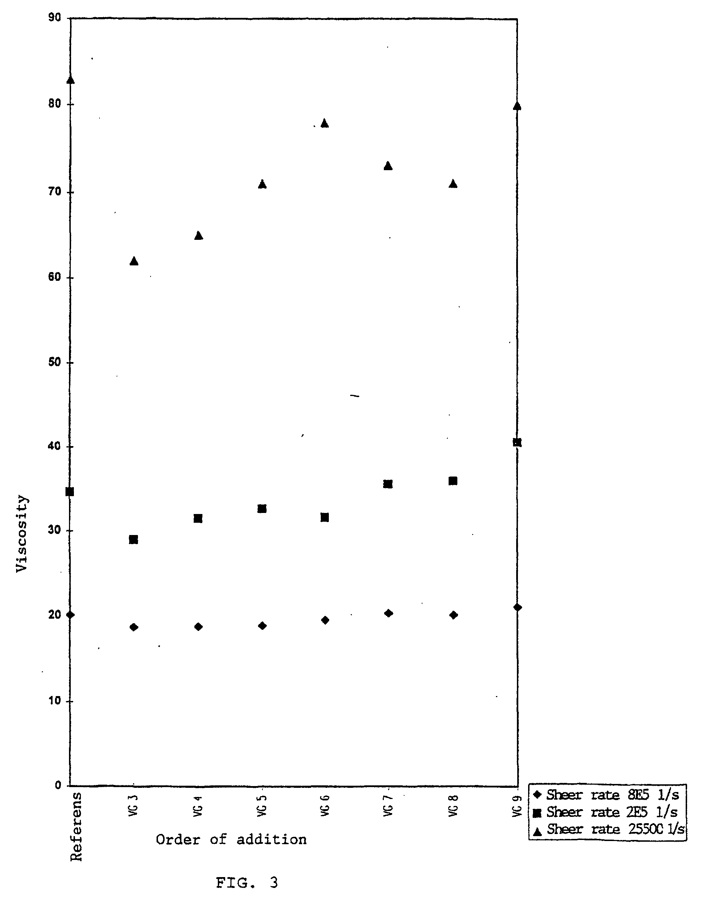

Fig. 3 illustrates the effect of the timing of waterglass addition on viscosity at different shear rates. As shown in Fig. 3, measured with a Hercules-Hi-shear viscosimeter at shear rate SR = 25500 s⁻¹, the fall in viscosity was the greater the earlier waterglass was added into the coating mixture. This effect was first observed in test VG3, in which waterglass was added in the third place into the mixture. In test VG3, the viscosity of the mixture was 20 % lower than in the reference test. Fig. 3 shows that at high shear rates (SR = 800 000 s⁻¹, measured with a high-pressure capillary viscosimeter) the addition of waterglass and its position in the order of addition had no effect. At a shear rate of SR = 200 000 s⁻¹, the position of waterglass in the order of addition still had an effect, i.e. waterglass reduced the viscosity of the mixture up to test VG3.

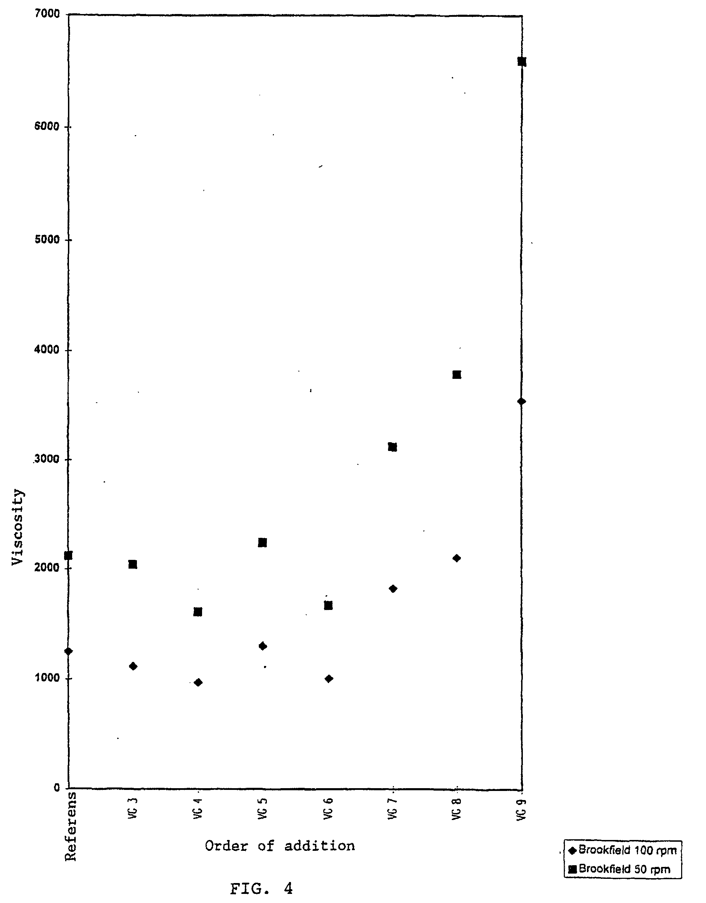

Fig. 4 illustrates the effect of the order of addition on the viscosity of the coating mixture, measured (Brookfield) at mixing speeds of 50 and 100 rpm. It can be seen from Fig. 4 that, in the coating mixtures in tests VG3 - VG6, the viscosity was about the same or somewhat lower than in the reference coating. At low shear rates, waterglass addition done after the addition of kaolin resulted in a significant rise in the viscosity of the mixture, with test VG9 showing a nearly fourfold viscosity value as compared with the reference test.

### EXAMPLE 5

The effect of the amount of waterglass added on the prevention of calcium shock was studied by adding 0 - 0.9 pph waterglass (Zeopol 25) to a coating mixture as in Example 4 at 0.1 pph intervals. The addition was done as in test VG6, i.e. waterglass was added in the sixth place to the coating mixture.

### EXAMPLE 6

In this experiment, the effect of the addition of waterglass on the paper to be produced and its printing properties was tested. A paper coating test and a printing test on the paper produced were carried out. The basic coating material used was a coating prepared from gypsum pigment slurry and kaolin mixture, to which was added 6 pph starch and 0.43 pph waterglass modified with NaOH. A reference coating was prepared without waterglass. The coating of the paper was performed using a film coating machine. The base paper used was a wood-containing base paper, 35 gm⁻².

In calendered paper with no printing on it, no substantial difference was detected in comparison with paper produced with the reference coating. The only difference in printed paper was that its gloss was 3 % lower in 1-ink surface (gloss 71% for paper with a coating containing waterglass, 74% for reference paper); in the water surface no difference could be detected; 'water surface' here means an area in the paper which has been printed by an offset impression roller having water in place of printing ink, in other words, which produces no ink transfer.

From Table 1 it can be seen that the Bendtsen and PPS roughness values where somewhat higher for the coating containing waterglass than for the reference coating, which explains the reduction in gloss. The reason for the difference in roughness is not clear.

**Table 1.**

| Roughness of paper surface | | |
|---|---|---|
| Roughness | Waterglass added | No waterglass |
| PPS roughness 1-ink, black | 1.9 µm | 1.7 µm |
| Bendtsen roughness 1-ink, black | 44 ml/min | 34 ml/min |
| Bendtsen roughness 2-ink, black | 40 ml/min | 35 ml/min |

The invention is not restricted to the examples of its embodiments described above, but many variations are possible within the scope of the inventive idea defined by the claims.

## Claims

1. Use of waterglass for prevention of calcium shock in a paper coating mixture containing a calcium-based pigment which is coated on a base paper.

2. Use of waterglass as defined in claim 1, **characterised in that** the amount of waterglass used is 0.01 - 2 pph, preferably 0.2 - 1 pph, most preferably 0.05 - 0.9 pph, calculated on the basis of the dry matter content of the pigment.

3. Use of waterglass as defined in claim 1 or 2, **characterised in that** waterglass is added to the coating mixture so that the value of x in the relationship NaₐO : x · SiO₂ is x = 0.1 - 10, suitably x < 3.5, preferably x < 2.5.

4. Use of waterglass as defined in any one of claims 1 - 3, **characterised in that** the coating contains a dispersing agent.

5. Use of waterglass as defined in any one of claims 1 - 4, **characterised in that** the coating contains gypsum.

6. Use of waterglass as defined in any one of claims 1 - 5, **characterised in that** waterglass is added before the addition of the calcium-based pigment.

7. Use of waterglass as defined in any one of claims 1 - 6, **characterised in that** the coating contains an optical whitener, which is added after the addition of waterglass.

8. Use of waterglass as defined in any one of claims 1 - 7, **characterised in that** the coating contains kaolin.

## Patentansprüche

1. Verwendung von Wasserglas zur Verhinderung eines Calciumschocks in einer Papierbeschichtungsmischung, enthaltend ein Pigment auf Calciumbasis, welche auf ein Rohpapier aufgetragen wird.

2. Verwendung von Wasserglas wie in Anspruch 1 definiert, **dadurch gekennzeichnet, dass** die verwendete Menge an Wasserglas 0,01 - 2 pph, vorzugsweise 0,2 - 1 pph, am meisten bevorzugt 0,05 - 0,9 pph beträgt, berechnet bezogen auf den Trockensubstanzgehalt des Pigments.

3. Verwendung von Wasserglas wie in Anspruch 1 oder 2 definiert, **dadurch gekennzeichnet, dass** Wasserglas zu der Beschichtungsmischung so zugegeben wird, dass für den Wert von x in dem Verhältnis Na₂O : x • SiO₂ gilt: x = 0,1 - 10, zweckmäßigerweise x < 3,5, vorzugsweise x < 2,5.

4. Verwendung von Wasserglas wie in einem der Ansprüche 1 - 3 definiert, **dadurch gekennzeichnet, dass** die Beschichtung ein Dispergiermittel enthält.

5. Verwendung von Wasserglas wie in einem der Ansprüche 1 - 4 definiert, **dadurch gekennzeichnet, dass** die Beschichtung Gips enthält.

6. Verwendung von Wasserglas wie in einem der Ansprüche 1 - 5 definiert, **dadurch gekennzeichnet, dass** das Wasserglas vor der Zugabe des Pigments auf Calciumbasis zugegeben wird.

7. Verwendung von Wasserglas wie in einem der Ansprüche 1 - 6 definiert, **dadurch gekennzeichnet, dass** die Beschichtung einen optischen Aufheller enthält, welcher nach der Zugabe von Wasserglas zugegeben wird.

8. Verwendung von Wasserglas wie in einem der Ansprüche 1 - 7 definiert, **dadurch gekennzeichnet, dass** die Beschichtung Kaolin enthält.

## Revendications

1. Utilisation de verre soluble pour empêcher un choc calcique dans un mélange pour couchage du papier contenant un pigment à base de calcium qui est déposé par revêtement sur un papier de base.

2. Utilisation de verre soluble selon la revendication 1, **caractérisée en ce que** la quantité de verre soluble utilisée est de 0,01-2 pph, de préférence de 0,2-1 pph, tout spécialement de 0,05-0,9 pph, calculée sur la base de la teneur en matière sèche du pigment.

3. Utilisation de verre soluble selon la revendication 1 ou 2, **caractérisée en ce que** le verre soluble est ajouté au mélange de couchage de façon que la valeur de x dans la relation Na₂O : x • SiO₂ soit x = 0,1-10, de façon convenable x < 3,5, de préférence x < 2,5.

4. Utilisation de verre soluble selon l'une quelconque des revendications 1 à 3, **caractérisée en ce que** le couchage contient un agent dispersant.

5. Utilisation de verre soluble selon l'une quelconque des revendications 1 à 4, **caractérisée en ce que** le couchage contient du gypse.

6. Utilisation de verre soluble selon l'une quelconque des revendications 1 à 5, **caractérisée en ce que** le verre soluble est ajouté avant l'addition du pigment à base de calcium.

7. Utilisation de verre soluble selon l'une quelconque des revendications 1 à 6, **caractérisée en ce que** le couchage contient un azurant optique, qui est ajouté après l'addition de verre soluble.

8. Utilisation de verre soluble selon l'une quelconque des revendications 1 à 7, **caractérisée en ce que** le couchage contient du kaolin.
